(19) Europäisches Patentamt

European Patent Office    (11) Publication number:    **0 038 559**

Office européen des brevets    **B1**

(12)    **EUROPEAN PATENT SPECIFICATION**

(45) Date of publication of patent specification: 02.09.87    (51) Int. Cl.⁴: **B 29 C 71/00, B 29 D 7/01,** B 29 C 47/88

(21) Application number: 81103022.0

(22) Date of filing: 21.04.81

(54) Method of producing an abrasion resistant sheet and apparatus for producing it.

(30) Priority: 22.04.80 US 138491

(43) Date of publication of application:
28.10.81 Bulletin 81/43

(45) Publication of the grant of the patent:
02.09.87 Bulletin 87/36

(84) Designated Contracting States:
BE DE FR GB IT NL SE

(56) References cited:
CH-A- 456 933
DE-A-1 504 890
DE-A-2 022 313
FR-A-2 115 849
FR-A-2 287 983
FR-A-2 297 126
FR-A-2 360 402
US-A-3 651 196

(73) Proprietor: SIGNODE CORPORATION
3600 West Lake Avenue
Glenview Illinois 60025 (US)

(72) Inventor: Van Erden, Donald L.
6 Lakeview Court
Wildwood III. 60030 (US)
Inventor: Gould, Russell J.
1022 S. Church Road
Mount Prospect III. 60056 (US)
Inventor: Matsunaga, Yukio A.
6441 North Magnolia
Chicago III. 60626 (US)

(74) Representative: Groening, Hans Wilhelm, Dipl.-Ing.
Patentanwälte Strehl Schübel-Hopf Groening
Schulz Widenmayerstrasse 17 Postfach 22 03 45
D-8000 München 22 (DE)

## Description

This invention relates to a method and an apparatus for producing an abrasion resistant sheet from linearly cristallizable polypropylene material; in which said material is extruded in a sheet at a first temperature at which said material is rendered flowable; in which said sheet is cast on plural driven, heat-transfer casting rolls and fed in a forward direction to form said sheet while maintaining said casting rolls at a temperature below said first temperature and cooling said sheet to a second temperature below said first temperature; in which said sheet is fed through heated and driven compression rolls to compress said sheet and to cause flow of said material in said sheet in the forward direction so as to reduce the cross-sectional thickness of said sheet; in which said sheet is placed under tension so as to cause an orientation of the macromolecular chains in said material of said sheet; and in which a surface of said sheet is heated for a sufficient time to cause fusion in the surface of said sheet for a portion of the sheet-thickness but insufficient to cause fusion in the entire thickness of the sheet.

A method of the above mentioned type is disclosed in US—A—3 394 045. According to this known method the material is extruded in a sheet at a temperature at which it is flowable and cast on chilling or cooling rolls. Then the cooled sheet is fed through heated driven compression rolls causing a flow of the material in the sheet, thus reducing the thickness of the sheet. Subsequently, the sheet is set under tension, so as to cause orientation of the sheet in the longitudinal direction and is then subjected to a surface treatment, e.g. by means of heated rolls successively on both sides of the sheet in order to reheat the respective surfaces to about 190 to 275°C for a time sufficient to cause surface fusion to a depth between 0,025 to 0,075 mm, but insufficient to cause fusion of the entire thickness of the sheet.

The application of chill rolls and of a cooling bath are known in the art of producing plastic sheets from US—A—3 651 196. Furthermore the treatment of oriented polypropylene sheets by means of stress-relieving rolls for reason of further stabilization is disclosed in FR—A—2 287 983. Stress-relieving rolls heated to a temperature of about 149°C are also known from said last reference.

The prior art does not teach or suggest the use of a single, continuous process for producing abrasion-resistant sheet wherein the chilling, surface-treating, and stress-relieving functions are provided in a single tensioning step or tensioning means for placing the sheet under tension in a forward direction in conjunction with the compression rolls. Accordingly, the invention has the object of improving the method and apparatus as mentioned above by efficiently combining, in one process, the chilling, surface-treating, and stress-relieving functions in a single tensioning step or tensioning means for placing the sheet under tension in a forward direction in conjunction with the compression rolls.

A sheet of polypropylene material having an oriented structure can be slit into narrow strips suitable for use as strap for binding articles. however, such straps are sometimes not of sufficiently uniform thickness throughout the length of the strap as is desired in some applications. For example, it is sometimes desired to use such strap in high-speed automatic strapping machines that feed the strap around an article, tension the strap tight about the article, and then heat-weld or fuse the overlapping strap ends together. But, a strap with a non-uniform thickness across its width and/or throughout its length is more likely to be improperly fed by the machine and the fusing of the overlapping strap ends is more likely to result in an unsatisfactory joint.

Therefore, another aspect of the invention has the object to improve the method and apparatus as mentioned above, in such a manner, that a sufficiently uniform thickness throughout the length of a sheet can be achieved. Uniform thickness strap can then be slit from the sheet, if desired.

Alternatively, the invention can be applied to an individual narrow sheet or strap to produce an improved length of strap.

As to realize these improvements of the known method, the invention is characterized in that:

(a) said sheet is fed through a cooling bath (24) between said casting rolls (16, 18, 20) and said compression rolls (34, 36) to cool said sheet to a third temperature below said second temperature;

(b) said sheet is maintained at a fourth temperature at said compression rolls (34, 36); and

(c) said sheet is placed under tension with a tensioning means (40, 42, 50, 52, 54, 60) in the forward direction in conjunction with said compression rolls (34, 36) so as to cause orientation of the macromolecular chains in said material of said sheet as said sheet exits said compression rolls, said step of placing said sheet under tension including the steps of

providing as part of said tensioning means one or more chill rolls (40, 42) and cooling said chill rolls so as to cool said sheet to a fifth temperature below said fourth temperature;

providing as part of said tensioning means one or more surface treatment rolls (50, 54) and heating said surface treatment rolls (50, 54) for reheating a surface of said sheet to a sixth temperature above said fifth temperature and between about 177°C and about 274°C for a time period sufficient to cause surface fusion to a depth between about 0.00254 mm and about 0.0762 mm but for a time period insufficient to cause fusion in the entire thickness of said sheet; and

providing as part of said tensioning means one or more stress relieving rolls (60) and heating said stress relieving rolls to a seventh temperature below said sixth temperature so as to cause said sheet to reach a uniform temperature throughout its cross section for effecting stabilization of said sheet;

whereby the rolls (40, 42, 50, 52, 54, 60) of said tensioning means not only place said sheet under tension in conjunction with said compression rolls (34, 36) for effecting said orientation of the macromolecular chains, but also simultaneously effect said cooling of said sheet, said surface fusion of said sheet, and said stabilization of said sheet.

The present invention provides also an improved apparatus for producing an abrasion resistant sheet from linearly cristallizable polypropylene material in which said apparatus includes: extrusion means for extruding said sheet of said material at a first temperature at which said material is rendered flowable; plural driven, heat transfer casting rolls for conveying said sheet in a forward direction and for forming said sheet, and associated means for maintaining said casting rolls at a temperature below said first temperature whereby said sheet is cooled to a second temperature below said first temperature; heated compression means having heated and driven compression rolls for compressing said sheet and for causing flow of said material in said sheet in the forward direction so as to reduce the cross-sectional thickness of said sheet; means for placing said sheet under tension so as to cause orientation of the macromolecular chains in said material of said sheet; and surface treatment rolls for heating a side surface of said sheet for a sufficient time to cause fusion in the surface of said sheet for a portion of the sheet thickness but insufficient to cause fusion in the entire thickness of the sheet. According to the present invention, said apparatus is characterized in that

(a) said apparatus includes a cooling bath (24) between said casting rolls (16, 18, 20) and said compression rolls (34, 36) for cooling said sheet to a third temperature below said second temperature;

(b) means for heating said compression rolls (34, 36) to maintain said sheet at a fourth temperature at said compression rolls (34, 36); and

(c) said means for placing said sheet under tension includes means (40, 42, 50, 52, 54, 60) for effecting said sheet tension in the forward direction in conjunction with said compression rolls (34, 36) so as to cause the orientation of the macromolecular chains in said material of said sheet as said sheet exits said compression rolls (34, 36), said tensioning means also including one or more chill rolls (40, 42) that are cooled so as to cool said sheet to a fifth temperature below said fourth temperature;

one or more of said surface treatment rolls (50, 54) heated for reheating a surface of said sheet to a sixth temperature above said fifth temperature and between about 177°C and about 274°C for a time period sufficient to cause surface fusion to a depth between about 0.00254 mm and about 0.0762 mm but for a time period insufficient to cause fusion in the entire thickness of said sheet; and

one or more stress relieving rolls (60) heated to a seventh temperature below said sixth temperature so as to cause said sheet to reach a uniform temperature throughout its cross section for effecting stabilization of said sheet;

whereby the rolls (40, 42, 50, 52, 54, 60) of said tensioning means not only place said sheet under tension in conjunction with said compression rolls (34, 36) for effecting said orientation of the macromolecular chains, but also simultaneously effect said cooling of said sheet, said surface fusion of said sheet, and said stabilization of said sheet.

According to the aforementioned method of the invention, an abrasion resistant sheet is produced from a sheet of unoriented, thermoplastic polymer material, such as a polyester or linear cristallizable polypropylene material. The sheet is produced in one continuous process which can be effected by a single, compact, highly efficient, and low cost production line. According to the present invention, a pair of spaced-apart, oppositely rotating, heated cylindrical rolls are provided and the sheet is fed in a continuous path partially around and in contact with each roll. One surface of the sheet is thus contacted with one roll and the other surface of the sheet is thus contacted with the other roll. The rolls are maintained in contact with the sheet while maintaining the strap under a tension. The advantage of the present invention is the combination of the chilling, surface-treating and stress-relieving functions in a single tensioning step or tensioning means for placing the sheet under tension in a forward direction in conjunction with the compression rolls in one press. Furthermore the method and apparatus of the invention involve operations at first, second, third, fourth, fifth and sixth temperatures with the special tensioning feature that not only places a sheet under tension in conjunction with pressure-rolls for effecting orientation, but also simultaneously effects cooling of the sheet, surface fusion of the sheet, and stabilization of the sheet. Further, a sheet or strap that is not of uniform thickness can be improved by this process. The surfaces of the sheet become substantially uniformly flat and parallel throughout the length of the strap.

The prior art document FR—A—3 287 983 teaches away from the present invention in that said document teaches that the stress relieving roller should be located up-stream of the chill rollers and that the tension should be maintained between the up-stream stress-relieving roller and the down-stream chill rollers by controlling the relative speed of the film at the stress-relieving roller and chill rollers, whilst in the present invention both the chill rolls and the stress-relieving rolls function as the tensioning means down-stream of the compression rolls.

Undesirable non-uniform thickness in strap can be eliminated by processing the strap with the surface treatment rolls in the same manner as the sheet described above. The strap is fed in a continuous path partially around and in contact with each surface treatment roll. One surface of the strap is thus contacted with one roll and the other surface of the strap is thus contacted with the other roll. The rolls are maintained in contact with the strap while maintaining the strap under a tension whereby the surfaces of the strap become substantially uniformly flat and parallel throughout the length of the strap.

Numerous other advantages and features of the present invention will become readily apparent from the following detailed description of the invention and of embodiments thereof, from the claims and from the drawings.

Brief Description of the Drawings

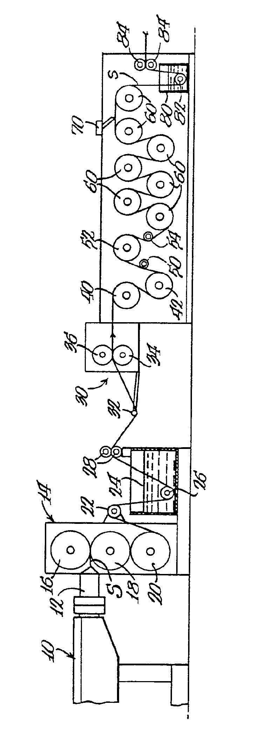

In the accompanying drawings forming part of the specification and in which like numerals are employed to designate like parts throughout the same, a single Figure is a simplified, schematic view of apparatus for effecting the method of the present invention.

While this invention is susceptible of embodiment in many different forms, there are shown in the drawings and will herein be described in detail preferred embodiments and process parameters of the invention. It should be understood, however, that the present disclosure is to be considered as an exemplification of the principles of the invention and is not intended to limit the invention to the embodiments illustrated or to the process parameter values listed.

The apparatus described herein has certain conventional mechanisms, such as drive mechanisms, control mechanisms, tension sensing mechanisms, etc., the details of which, though not fully illustrated or described, will be apparent to those having skill in the art and an understanding of the necessary functions of such mechanisms.

A novel method and apparatus for manufacturing an orientable polypropylene sheet, in a single continuous and compact line is illustrated by means of a greatly simplified schematic representation in said Figure. The method and apparatus is directed to fabricating a sheet of the orientable polypropylene, mechanically working the sheet to obtain an orientation of the macromolecular chains, treating the surface of the sheet to increase abrasion resistance, and slitting the sheet to provide narrower sheets. Portions of the line may also be used to treat plastic strapping that has a non-uniform cross sectional thickness throughout its length so as to orient the opposing side surfaces of such a strap in a substantially uniformly parallel configuration throughout the length of the strap.

According to the present invention, polypropylene sheet material is extruded from the raw materials under the conditions described in detail in the aforementioned Patent No. 3,394,045. For a full understanding of the nature and operation of the formation of such a sheet material, reference may be had to that patent. In this description, only such information as is relevant to the present invention will be described, and only in sufficient detail as to afford an understanding of the present invention. However, the entire disclosure of the U.S. Patent No. 3,394,045, insofar as it is consistent with the present disclosure, is hereby incorporated in and made a part of this application by reference thereto. Such modifications as are necessary to adapt the teachings set forth in that patent to the present invention are described in detail hereinafter.

With reference to said Figure, a conventional plastic extruder 10 is fed isotactic polypropylene granules. The granules are rendered plastic or flowable by heating to a sufficient temperature, say approximately 254°C.

Preferably, the material is extruded through a conventional sheet die 12 at a pressure of approximately 140.61 kg/cm$^2$ to extrude a web, workpiece, or sheet S having a suitable width, for example 7.62 cm, and having a suitable thickness, for example, 0.419 cm. These dimensions are suitable for producing an ultimate sheet product that can be used as strapping.

The sheet S is passed through a conventional casting roll assembly 14 comprising an upper roll 16, a middle roll 18 and a bottom roll 20. Preferably, the rolls are maintained at about 65.6°C. For this purpose, the rolls may contain internal passages allowing the circulation of a heat transfer of fluid therethrough.

After exiting from the casting roll assembly 14, the sheet S is trained over a guide roll 22 and down into a tank 24 containing a bath of liquid, such as water, for reducing the temperature of the sheet to a substantially uniform value throughout its transverse cross-section.

The sheet is trained around a guide roll 26 in the tank 24 and conveyed upwardly therefrom out of the tank 24 between draw rolls 28. The sheet is then conveyed to a rolling mill assembly 30 which incorporates, on its upstream side, an adjustable tension speed controlling dancer roll 32. The dancer roll 32 is preferably at ambient temperature. The dancer roll speed control may be of conventional design and may be operated through conventional controls to establish a desired speed in that region of the sheet conveying path.

The rolling mill assembly 30 includes a pair of opposed, oppositely rotating compression rolls 34 and 36. The compression rolls may be of conventional design for causing flow of the material in the sheet S in the direction of the feeding of the sheet in the path thereby causing production of a sheet of reduced cross-sectional thickness as the sheet exits from the nip of the rolls. The compression rolls 34 and 36 are preferably maintained at a temperature in the range of between 37.8°C and 104.4°C.

The sheet S exiting from the rolling mill assembly 30 is next trained about a pair of oppositely rotating chill rolls 40 and 42 which are preferably maintained at a temperature of about 29.4°C. The chill rolls are rotated at a higher surface velocity than the upstream compression rolls 34 and 36.

The chill rolls 40 and 42 are operated at a higher speed to create a further orientation of the sheet between the nip of the compression rolls 34 and 36 and the chill rolls 40 and 42. The increased tension is preferably maintained in the range of between 1.79 and 62.56 kg/cm of sheet width to create an orientation of the macromolecular chains in the polypropylene material. The orientation may be in generally planar orientation. The sheet may have a uniplanar, axial oriented crystalline structure of increased strength or some other increased strength structure resulting from a tension induced orientation.

It has been found that the use of such compression and the resulting sheet thickness reduction decreases the degree of brittleness of the formed sheet. That is, if the sheet is not compressed and reduced in cross-sectional thickness by the rolls 34 and 36, the oriented sheet produced is more brittle than a sheet that is first compressed by the rolls 34 and 36.

The resulting brittleness in the final sheet product is dependent upon, among other things, the type of polypropylene feed material that is used. It has been found that more expensive types of polypropylene feed material will produce an oriented sheet that is not as brittle as sheet produced with less expensive types of feed material. However, it has been found that if the less expensive feed material is used, the degree of brittleness in the formed sheet can be substantially reduced if the sheet is first compressed, as with rolls 34 and 36. This permits the use of less expensive feed materials for producing oriented sheet with an acceptable brittleness level that was only heretofore possible by using the more expensive feed materials.

The oriented polypropylene sheet is fed from the chill rolls 40 and 42 to a surface treatment station which includes 1) a first, heated, surface treatment roll 50 adapted to contact one surface of the sheet, 2) a guide roll 52, and 3) a second, heated, surface treatment roll 54 adapted to contact the other side surface of the sheet.

The surface treatment rolls 50 and 54 function to raise the temperature of the surface layer of the sheet to a fusion temperature, generally in the range of between about 177°C and about 274°C. The surface layer may be fused for a depth of between about 0.00254 mm and about 0.0762 mm but generally the fusion layer obtains a thickness of about 0.0254 mm. This fusion treatment of the surface of the sheet increases abrasion resistance. The guide roll 52 is preferably maintained at about 29.4°C between the two surface treatment rolls 50 and 54.

The tendency of oriented polypropylene sheet to abrade is more fully disclosed in the aforementioned U.S. Patent No. 3,394,045 and attention is directed thereto for a complete discussion of the problem and for a complete discussion of how fusing the surface layer of the sheet mitigates this problem.

The aforementioned U.S. Patent No. 3,394,045 suggests that the sheet of oriented polypropylene material may be heated and the surface fused by contact with a gas flame-heated roll. In accordance with the present invention, the novel rolls 50 and 54 are heated and maintained in contact with the strap in a manner sufficient to form the fusion layer in the sheet. Specifically, each roll 50 and 54 is preferably cylindrical in shape, fabricated from aluminum or cold rolled steel, has a diameter of about 7.62 cm, and contains passages permitting the circulation of a heat transfer fluid, such as oil, at a temperature of between about 177°C and 371°C.

Each roll 50 and 54 is in contact with the sheet so as to effect, in combination with the other rolls, a total tension in the sheet along the feeding direction of greater than 1.79 kg/cm of sheet width section and preferably between about 1.79 and 62.56 kg/cm of sheet width for sheet having a thickness of between 0.0127 and 0.0889 cm.

The sheet is fed in a path partially around the circumference of each roll for an arc length sufficient to produce the desired surface fusion layer for the selected sheet speed, roll temperature and roll diameter.

Within the parametric ranges described above a contact arc angle of between 40° and 80° with a sheet conveying speed in the range of about 15.24 and 106.68 m/min has been found to function satisfactorily. It is believed that lower and higher speeds, including speeds of 182.88 m/min or more, will also function satisfactorily.

After exiting from the surface treatment station, the sheet is trained around a plurality of heated rolls 60 which function to stress relieve the sheet to stabilize the oriented polypropylene material. The heat treatment of oriented polypropylene material to effect the stabilization is well known in the art and is not discussed in detail here. However, in one form of the heat treatment, each of the stress relieving rolls 60 is maintained at about 149°C.

In the stress relieving section of the line, the tension on the strap may be suitably controlled, by conventional techniques, as necessary to effect proper stress relieving without substantially deleteriously effecting the orientation of the polypropylene material in the sheet.

Preferably, a slitting means is located in the stress relieving or stabilization region of the process line, and in said Figure, is located between the last two stress relieving rolls 60 where it is designated generally by numeral 70.

Following the slitting of the sheet by the slitting means 70 at the location illustrated in the schematic diagram of said Figure, the narrower sheets or strips s are guided around the last stress relieving roll 60 and around guide roll 82 through a tank 80 containing a heat transfer fluid, such as water, for cooling the strips to a desired temperature or to ambient temperature.

The strips are withdrawn from the tank 80 along the feed path between draw rolls 84 which may be maintained at a suitable temperature at ambient or below, and preferably at about 10°C. From the draw rolls 84, the strips may be wound on separate storage spools (not illustrated) or otherwise removed as may be desired.

It has been found that the above-described surface treatment rolls 50 and 54 may function, in addition to providing the fused surface layer, to treat previously fabricated oriented polypropylene strap that has a non-uniform thickness across its width and/or along its length. Specifically, it has been found that contacting such non-uniform thickness strap with the rolls 50 and 54 under the process parameters described above for those rolls, causes the surfaces of the strap to become substantially uniformly flat and parallel throughout the length of the strap. Such improved strap is less likely to jam an automatic plastic strapping machine and is more likely to form a satisfactory fusion weld after being looped and tensioned about an article.

## Claims

1. Method for producing an abrasion resistant sheet (S) from linearly crystallizable polypropylene material, in which said material is extruded in a sheet at a first temperature at which said material is rendered flowable; in which said sheet is cast on plural driven, heat transfer casting rolls (16, 18, 20) and fed in a foward direction to form said sheet while maintaining said casting rolls at a temperature below said first temperature and cooling said sheet to a second temperature below said first temperature; in which said sheet is fed through heated and driven compression rolls (34, 36) to compress said sheet and to cause flow of said material in said sheet in the forward direction so as to reduce the cross-sectional thickness of said sheet; in which said sheet is placed under tension so as to cause an orientation of the macromolecular chains in said material of said sheet; and in which a surface of said sheet is heated for a sufficient time to cause fusion in the surface of said sheet for a portion of the sheet thickness but insufficient to cause fusion in the entire thickness of the sheet; characterized in that:

(a) said sheet is fed through a cooling bath (24) between said casting rolls (16, 18, 20) and said compression rolls (34, 36) to cool said sheet to a third temperature below said second temperature;

(b) said sheet is maintained at a fourth temperature at said compression rolls (34, 36); and

(c) said sheet is placed under tension with a tensioning means (40, 42, 50, 54, 60) in the forward direction in conjunction with said compression rolls (34, 36) so as to cause orientation of the macromolecular chains in said material of said sheet as said sheet exits said compression rolls, said step of placing said sheet under tension including the steps of

providing as part of said tensioning means one or more chill rolls (40, 42) and cooling said chill rolls so as to cool said sheet to a fifth temperature below said fourth temperature.

providing as part of said tensioning means one or more surface treatment rolls (50, 54) and heating said surface treatment rolls (50, 54) for reheating a surface of said sheet to a sixth temperature above said fifth temperature and between about 177°C and about 274°C for a time period sufficient to cause surface fusion to a depth between about 0.00254 mm and about 0.0762 mm but for a time period insufficient to cause fusion in the entire thickness of said sheet; and

providing as part of said tensioning means one or more stress relieving rolls (60) and heating said stress relieving rolls to a seventh temperature below said sixth temperature so as to cause said sheet to reach a uniform temperature throughout its cross section for effecting stabilization of said sheet;

whereby the rolls (40, 42, 50, 52, 54, 60) of said tensioning means not only place said sheet under tension in conjunction with said compression rolls (34, 36) for effecting said orientation of the macromolecular chains, but also simultaneously effect said cooling of said sheet, said surface fusion of said sheet, and said stabilization of said sheet.

2. Method in accordance with claim 1 characterized in that said method includes the step of providing at least two oppositely rotating surface treatment rolls (50, 54) spaced apart along said sheet with one of said surface treatment rolls (50) in contact with one side surface of said sheet for a portion of the roll circumference and with the other of said surface treatment rolls (54) in contact with the other side surface of said sheet for a portion of the roll circumference.

3. Method in accordance with claim 1 characterized in that said method includes the step of positively driving at least one or more of said chill rolls (40, 42), said surface treatment rolls (50, 54), and said stress-relieving rolls (60) to rotate at a greater surface velocity than said compression rolls (34, 36) to effect the placement of said sheet under tension.

4. Method in accordance with claim 3 characterized in that said method includes the step of positively driving said chill rolls (40, 42) to rotate at a greater surface velocity than said compression rolls (34, 36) for effecting placement of said sheet under tension in the range of between about 1.79 and about 62.56 kg/cm of sheet width.

5. Method in accordance with claim 1 characterized in that said method includes the step of heating said compression rolls (34, 36) to maintain them at a temperature in the range of between about 37.8°C and about 104.4°C.

6. Method in accordance with claim 1 characterized in that said method includes the step of circulating a heat transfer fluid at a temperature of between about 177°C and about 371°C in passages of each said surface treatment roll (50, 54).

7. Method in accordance with claim 1 characterized in that said method includes the step of heating at least one of said stress-relieving rolls (60) to said seventh temperature of about 149°C.

8. Method in accordance with claim 1 characterized in that said sheet is maintained at a tension greater than 0.89 kg/cm of the sheet transverse width for at least a portion of its travel in a stabilization region of said path at said stress relieving rolls (60).

9. Method in accordance with claim 1 characterized in that each said surface treatment roll (50, 54) is cylindrical and has a diameter of about 7.62 cm and in that the step of placing said sheet under tension includes feeding said sheet at a speed in the range of between 15.24 and 106.68 m/minute at said surface treatment rolls (50, 54).

10. Method in accordance with claim 1 characterized in that each said surface treatment roll (50, 54) is cylindrical and has a diameter of about 7.62 cm and in that the step of placing said sheet under tension includes feeding said sheet in a path partially around the circumference of each said surface treatment roll for an arc of between 40 degrees and 80 degrees.

11. Method in accordance with claim 1 characterized in that the step of placing said sheet under tension includes contacting said sheet with at least one said surface treatment roll (50, 54) having a material contacting surface selected from a group of metals consisting of aluminum and cold rolled steel.

12. Apparatus for producing an abrasion resistant sheet (S) from linearly crystallizable polypropylene material in which said apparatus includes: extrusion means (10, 12) for extruding said sheet of said material at a first temperature at which said material is rendered flowable; plural driven, heat transfer casting rolls (16, 18, 20) for conveying said sheet in a forward direction and for forming said sheet, and associated means for maintaining said casting rolls at a temperature below said first temperature whereby said sheet is cooled to a second temperature below said first temperature; heated compression means having heated and driven compression rolls (34, 36) for compressing said sheet and for causing flow of said material in said sheet in the forward direction so as to reduce the cross-sectional thickness of said sheet; means for placing said sheet under tension so as to cause orientation of the macromolecular chains in said material of said sheet; and surface treatment rolls (50, 54) for heating a surface of said sheet for a sufficient time to cause fusion in the surface of said sheet for a portion of the sheet thickness but insufficient to cause fusion in the entire thickness of the sheet; characterized in that

(a) said apparatus includes a cooling bath (24) between said casting rolls (16, 18, 20) and said compression rolls (34, 36) for cooling said sheet to a third temperature below said second temperature;

(b) means for heating said compression rolls (34, 36) to maintain said sheet at a fourth temperature at said compression rolls (34, 36); and

(c) said means for placing said sheet under tension includes means (40, 42, 50, 52, 54, 60) for effecting said sheet tension in the forward direction in conjunction with said compression rolls (34, 36) so as to cause the orientation of the macromolecular chains in said material of said sheet as said sheet exits said compression rolls (34, 36), said tensioning means also including

one or more chill rolls (40, 42) that are cooled so as to cool said sheet to a fifth temperature below said fourth temperature;

one or more of said surface treatment rolls (50, 54) heated for reheating a surface of said sheet to a sixth temperature above said fifth temperature and between about 177°C and about 274°C for a time period sufficient to cause surface fusion to a depth between about 0.00254 mm and about 0.0762 mm but for a time period insufficient to cause fusion in the entire thickness of said sheet; and

one or more stress relieving rolls (60) heated to a seventh temperature below said sixth temperature so as to cause said sheet to reach a uniform temperature throughout its cross section for effecting stabilization of said sheet;

whereby the rolls (40, 42, 50, 52, 54, 60) of said tensioning means not only place said sheet under tension in conjunction with said compressions rolls (34, 36) for effecting said orientation of the macromolecular chains, but also simultaneously effect said cooling of said sheet, said surface fusion of said sheet, and said stabilization of said sheet.

13. Apparatus in accordance with claim 12 characterized in that said one or more surface treatment rolls (50, 54) includes at least two oppositely rotating surface treatment rolls (50, 54) spaced apart along said sheet with one of said surface treatment rolls (50) in contact with one side surface of said sheet for a portion of its circumference and with the other of said surface treatment rolls (54) in contact with the other side surface of said sheet for a portion of its circumference.

14. Apparatus in accordance with claim 12 characterized in that each said surface treatment roll (50, 54) is cylindrical and has a diameter of about 7.62 cm.

15. Apparatus in accordance with claim 12 characterized in that said tensioning means includes means for driving at least one or more of said chill rolls (40, 42), said surface treatment rolls (50, 54), and said stress-relieving rolls (60) to rotate at a greater surface velocity than said compression rolls (34, 46) to effect the placement of said sheet under tension.

16. Apparatus in accordance with claim 15 characterized in that said apparatus includes means for driving said chill rolls (40, 42) to rotate at a greater surface velocity than said compression rolls (34, 36) for effecting placement of said sheet under tension in the range of between about 1.79 and about 62.56 kg/cm of sheet width.

17. Apparatus in accordance with claim 12 characterized in that said compression rolls (34, 36) are heated to be maintained at a temperature in the range of between about 37.8°C and about 104.4°C.

18. Apparatus in accordance with claim 12 characterized in that each said surface treatment roll (50, 54) is fabricated from aluminum or cold rolled steel and defines passages permitting the circulation of a heat transfer fluid at a temperature of between about 177°C and about 371°C.

19. Apparatus in accordance with claim 12 characterized in that said stress-relieving rolls (60) include means for heating each said stress-relieving roll to said seventh temperature at about 149°C.

**Patentansprüche**

1. Verfahren zum Erzeugen eines verschleißfesten Bandes (S) aus linear kristallisierbarem Propylenmaterial; bei dem das Material als Band bei einer ersten Temperatur extrudiert wird, bei der das Material fließfähig gehalten wird; bei dem das Band auf mehrere angetriebene, hitzeübertragende Gießwalzen (16, 18, 20) gegossen und in Vorwärtsrichtung zugeführt wird, um das Band zu bilden, während die Gießwalzen auf einer Temperatur unterhalb der ersten Temperatur gehalten werden und das Band auf eine zweite Temperatur unterhalb der ersten Temperatur gekühlt wird; bei dem das Band über erhitzte und angetriebene Druckwalzen (34, 36) geführt wird, um das Band zu komprimieren und das Fließen des Materials in dem Band in Vorwärtsrichtung zu veranlassen, damit die Querschnittsdicke des Bandes reduziert wird; bei dem das Band unter Spannung gesetzt wird, um eine Ausrichtung der makromolekularen Ketten in dem Bandmaterial zu bewirken; und bei dem eine Oberfläche des Bandes für eine Zeit erhitzt wird, die ausreicht, um ein Schmelzen in der Oberfläche des Bandes für einen Teil der Banddicke zu verursachen, jedoch unzureichend ist, um einen Schmelzvorgang in der gesamten Dicke des Bandes zu verursachen; dadurch gekennzeichnet, daß:

(a) das Band durch ein Kühlbad (24) zwischen den Gießwalzen (16, 18, 20) und den Druckwalzen (34, 36) geführt wird, um das Band auf eine dritte Temperatur unterhalb der zweiten Temperatur zu kühlen;

(b) das Band auf einer vierten Temperatur an den Druckwalzen (34, 36) gehalten wird; und

(c) das Band mit einer Spannvorrichtung (40, 42, 50, 52, 54, 60) in Vorwärtsrichtung in Verbindung mit den Druckwalzen (34, 36) unter Spannung gesetzt wird, damit die Orientierung der makromolekulaten Ketten in dem Material des Bandes veranlaßt wird, wenn das Band die Druckwalzen verläßt, wobei das Unterspannungsetzen des Bandes folgende Schritte umfaßt:

Zurverfügungstellung einer oder mehrerer Abschreckwalzen (40, 42) als Teil der Spannvorrichtung und Kühlen der Abschreckwalzen, damit das Band auf eine fünfte Temperatur unterhalb der vierten Temperatur gekühlt wird;

Zurverfügungstellung von einer oder mehreren Oberflächenbehandlungswalzen (50, 54) als Teil der Spannvorrichtung und Erhitzen der Oberflächenbehandlungswalzen (50, 54) zum Wiedererhitzen einer Oberfläche des Bandes auf eine sechste Temperatur oberhalb der fünften Temperatur und zwischen etwa 177°C und etwa 274°C für eine Zeitdauer, die ausreicht, um das Schmelzen der Oberfläche bis zu einer Tiefe zwischen etwa 0,00254 mm und etwa 0,0762 mm zu veranlassen, jedoch unzureichend ist, um ein Schmelzen der gesamten Dicke des Bandes zu verursachen, und

Zurverfügungstellung von einer oder mehreren spannungslösenden Walzen (60) und Erhitzen der spannungslösenden Walzen auf eine siebte Temperatur unterhalb der sechsten Temperatur, damit in dem Band eine gleichmäßige Temperatur über seinen gesamten Querschnitt zur Stabilisierung des Bandes bewirkt, wird;

wodurch die Walzen (40, 42, 50, 52, 54, 60) der Spannvorrichtung das Band nicht nur in Verbindung mit den Druckwalzen (34, 36) der Orientierung der makromolekularen Ketten unter Spannung setzen, sondern auch gleichzeitig das Abkühlen des Bandes, das Schmelzen der Oberfläche des Bandes und das Stabilisieren des Bandes bewirken.

2. Verfahren nach Anspruch 1, dadurch gekennzeichnet, daß das Verfahren den Schritt der Zurverfügungstellung von mindestens zwei entgegengesetzt drehenden Oberflächenbehandlungswalzen (50, 54) umfaßt, die im Abstand voneinander längs des Bandes angeordnet sind, wobei eine der Oberflächenbehandlungswalzen (50) mit einem Teil des Walzenumfangs mit der Oberfläche einer Seite des Bandes und die andere der Oberflächenbehandlungswalzen (54) mit der Oberfläche der anderen Seite des Bandes in Berührung gebracht werden.

3. Verfahren nach Anspruch 1, dadurch gekennzeichnet, daß das Verfahren den Schritt des positiven Antriebs mindestens einer oder mehrerer Abschreckwalzen (40, 42), der Oberflächenbehandlungswalzen (50, 54) und der spannungsentlastenden Walzen (60) umfaßt, um sie mit einer größeren Oberflächengeschwindigkeit zu drehen als die Druckwalzen (34, 36) um das Band unter Spannung zu setzen.

4. Verfahren nach Anspruch 3, dadurch gekennzeichnet, daß das Verfahren den Schritt des Positiven Antriebs der Abschreckwalzen (40, 42) mit einer größeren Oberflächengeschwindigkeit als der Druckwalzen (34, 36) zum Unterspannungsetzen des Bandes im Bereich zwischen etwa 1,79 und etwa 62,56 kg/cm der Bandbreite umfaßt.

5. Verfahren nach Anspruch 1, dadurch gekennzeichnet, daß das Verfahren den Schritt des Erhitzens der Druckwalzen (34, 36) umfaßt, um sie bei einer Temperatur im Bereich von zwischen etwa 37,8°C und etwa 104,4°C zu halten.

6. Verfahren nach Anspruch 1, dadurch gekennzeichnet, daß das Verfahren den Schritt der Zirkulation eines hitzeübertragenden Fluides bei einer Temperatur von zeischen etwa 177°C und etwa 371°C in Kanälen jeder Oberflächenbehandlungswalze (50, 54) umfaßt.

7. Verfahren nach Anspruch 1, dadurch gekennzeichnet, daß das Verfahren den Schritt der Erhitzung mindestens einer spannungsentlastenden Walze (60) auf die siebte Temperatur von etwa 149°C umfaßt.

8. Verfahren nach Anspruch 1, dadurch gekennzeichnet, daß das Band auf einer Spannung gehalten wird, die größer als 0,89 kg/cm der querverlaufenden Breite des Bandes auf mindestens einem Teil seiner Bewegungsbahn in einem Stabilisierungsbereich der Bewegungsbahn an den spannungsentlastenden Walzen (60) ist.

9. Verfahren nach Anspruch 1, dadurch gekennzeichnet, daß jede Oberflächenbehandlungswalze (50, 54) zylindrisch ist und einen Durchmesser von etwa 7,62 cm aufweist, und daß der Schritt des Unterspannungsetzens des Bandes das Zuführen des Bandes bei einer Geschwindigkeit im Bereich von zwischen 15,24 und 106,68 m/min an den Oberflächenbehandlungswalzen (40, 54) umfaßt.

10. Verfahren nach Anspruch 1, dadurch gekennzeichnet, daß jede Oberflächenbehandlungswalze (50, 54) zylindrisch ist und einen Durchmesser von etwa 7,62 cm aufweist und daß der Schritt des Unterspannungsetzens des Bandes das Zuführen des Bandes auf einer Bewegungsbahn umfaßt, die sich teilweise um den Umfang jeder Oberflächenbehandlungswalze auf einem Bogen von zwischen 40° und 80° erstreckt.

11. Verfahren nach Anspruch 1, dadurch gekennzeichnet, daß der Schritt des Unterspannungsetzens des Bandes die Berührung des Bandes durch mindestens eine Oberflächenbehandlungswalze (50, 54) mit einer Materialberührungsfläche umfaßt, die aus der Gruppe der Metalle ausgewählt ist, welche aus Aluminium und kalt gewalztem Stahl besteht.

12. Vorrichtung zum Erzeugen eines verschleißfesten Bandes (S) aus linear kristallisierbarem Propylenmaterial, bei dem die Vorrichtung umfaßt:

Extrusionsmittel (10, 12) zum Extrudieren des Bandmaterials bei einer ersten Temperatur, bei der das Material fließfähig gehalten wird;

mehrere angetriebene, Hitze übertragende Gießwalzen (16, 18, 20) zum Transportieren des Bandes in Vorwärtsrichtung und zum Formen des Bandes, sowie zugeordnete Mittel zur Aufrechterhaltung einer Temperatur der Gießwalzen unterhalb der ersten Temperatur, wodurch das Band auf eine zweite Temperatur unter der ersten Temperatur gekühlt wird;

erhitzte Druckmittel mit erhitzten und angetriebenen Druckwalzen (34, 36) zum Komprimieren des Bandes und zur Veranlassung der Fließens des Materials in dem Band in der Vorwärtsrichtung, um die Querschnittsdicke des Bandes zu reduzieren;

Mittel zum Unterspannungsetzen des Bandes, um eine Orientierung der makromolekularen Ketten in dem Material des Bandes zu verursachen; und Oberflächenbehandlungswalzen (50, 54) zum Erhitzen einer Oberfläche des Bandes für eine Zeit, die ausreicht, um einen Schmelzvorgang in der Oberfläche des Bandes für einen Teil der Banddicke zu verursachen, jedoch unzureichend ist, um einen Schmelzvorgang in der gesamten Dicke des Bandes zu verursachen;

dadurch gekennzeichnet; daß

(a) die Vorrichtung ein Kühlbad (24) zwischen den Gießwalzen (16, 18, 20) und den Druckwalzen (34, 36) zum Kühlen des Bandes auf eine dritte Temperatur unterhalb der zweiten Temperatur umfaßt;

(b) Mittel zum Erhitzen der Druckwalzen (34, 36) zum Aufrechterhalten des Bandes bei einer vierten Temperatur an den Druckwalzen (34, 36) vorgesehen sind; und

(c) die Mittel zum Unterspannungsetzen des Bandes Mittel (40, 42, 50, 52, 54, 60) zur Erzielung der Bandspannung in Vorwärtsrichtung in Verbindung mit den Druckwalzen (34, 36) umfassen, damit die Orientierung der makromolekularen Ketten in dem Material des Bandes veranlaßt wird, wenn das Band die Druckwalzen (34, 36) verläßt,

daß die Spannvorrichtung außerdem umfaßt:

eine oder mehrere Abschreckwalzen (40, 42), die gekühlt werden, um das Band auf eine fünfte Temperatur unterhalb der vierten Temperatur zu kühlen;

eine oder mehrere der Oberflächenbehandlungswalzen (50, 54) werden zum Wiedererhitzen einer Oberfläche des Bandes auf eine sechste Temperatur oberhalb der fünften Temperatur und zwischen etwa 177°C und etwa 274°C für eine Zeitdauer erhitzt, die ausreicht, um eine Oberflächenschmelzung bis auf eine Tiefe zwischen 0,00254 mm und etwa 0,762 mm zu bewirken, jedoch nicht ausreicht, um das Schmelzen in der gesamten Dicke des Bandes zu verursachen; und

eine oder mehrere spannungsentlastende Walzen (60) werden auf eine siebte Temperatur unterhalb der sechsten Temperatur erhitzt, damit das Band über seinen gesamten Querschnitt auf eine gleichmäßige Temperatur zur Erzielung einer Stabilisierung des Bandes erhitzt wird:

wodurch die Walzen (40, 42, 50, 52, 54, 60) der Spanvorrichtung nicht nur das Band in Verbindung mit den Druckwalzen (34, 36) zur Erzielung der Orientierung der makromolekularen Ketten unter Spannung setzen, sondern auch gleichzeitig das Kühlen des Bandes, die Oberflächenschmelzung des Bandes und die Stabilisierung des Bandes erreichen.

13. Vorrichtung nach Anspruch 12, dadurch gekennzeichnet, daß eine oder mehrere Oberflächenbehandlungswalzen (50, 54) mindestens zwei entgegengesetzt drehende Oberflächenbehandlungswalzen (50, 54) umfassen, die längs des Bandes im Abstand voneinander angeordnet sind, wobei eine der Oberflächenbehandlungswalzen (50) mit einem Teil seines Umfangs mit der Oberfläche einer Seite des Bandes und die andere der Oberflächenbehandlungswalzen (54) mit einem Teil ihres Umfangs mit der Oberfläche der anderen Seite des Bandes in Berührung stehen.

14. Vorrichtung nach Anspruch 12, dadurch gekennzeichnet, daß jede Oberflächenbehandlungswalze (50, 54) zylindrisch ist und einen Durchmesser von etwa 7,62 cm hat.

15. Vorrichtung nach Anspruch 12, dadurch gekennzeichnet, daß die Spannvorrichtung eine Vorrichtung zum Antrieb mindestens einer oder

17     **0 038 559**     18

mehrerer der Abschreckwalzen (40, 42), der Oberflächenbehandlungswalzen (50, 54) und der spannungsentlastenden Walzen (60) umfaßt, um sie mit einer größeren Oberflächengeschwindigkeit zu drehen als die Druckwalzen (34, 36), damit das Band unter Spannung gesetzt wird.

16. Vorrichtung nach Anspruch 15, dadurch gekennzeichnet, daß die Vorrichtung Mittel zum Antrieb des Abschreckwalzen (40, 42) umfaßt, um sie mit einer größeren Oberflächengeschwindigkeit zu drehen als die Druckwalzen (34, 36), damit das Band im Bereich von zwischen etwa 1,79 und etwa 62,56 kg/cm der Bandbreite unter Spannung gesetzt wird.

17. Vorrichtung nach Anspruch 12, dadurch gekennzeichnet, daß die Druckwalzen (34, 36) zur Aufrechterhaltung einer Temperatur im Bereich zwischen etwa 37,8°C und etwa 104,4°C erhitzt werden.

18. Vorrichtung nach Anspruch 12, dadurch gekennzeichnet, daß jede Oberflächenbehandlungswalze (50, 54) aus Aluminium oder kaltgewalztem Stahl hergestellt wird und Kanäle aufweist, welche die Zirkulation eines Hitzeübertragungsfluids bei einer Temperatur von zwischen etwa 177°C und etwa 371°C ermöglichen.

19. Vorrichtung nach Anspruch 12, dadurch gekennzeichnet, daß die spannungsentlastenden Walzen (60) Mittel zum Erhitzen jeder spannungsentlastenden Walze auf die siebte Temperatur bei etwa 149°C umfassen.

**Revendications**

1. Procédé de production d'une feuille résistante à l'abrasion (S) à partir d'une matière de polypropylène linéairement cristallisable; dans lequel on extrude ladite matière en une feuille à une première température à laquelle ladite matière devient coulable; dans lequel on coule ladite feuille sur des rouleaux de coulée multiples entraînés à transfert de chaleur (16, 18, 20) et on avance cette matière vers l'avant pour former ladite feuille tout en maintenant lesdits rouleaux de coulée à une température inférieure à ladite première température et en refroidissant ladite feuille à une seconde température inférieure à ladite première température; dans lequel on fait passer ladite feuille entre des rouleaux de compression chauffés et entraînés (34, 36) pour comprimer ladite feuille et provoquer la coulée de ladite matière dans ladite feuille vers l'avant pour réduire ainsi l'épaisseur de la section transversale de ladite feuille; dans lequel on met ladite feuille sous tension de manière à provoquer une orientation des chaînes macromoléculaires dans ladite matière de ladite feuille; et dans lequel on chauffe une surface de ladite feuille pendant une durée suffisante pour provoquer une fusion dans la surface de ladite feuille sur une partie de l'épaisseur de la feuille mais insuffisante pour provoquer une fusion de toute l'épaisseur de la feuille, caractérisé en ce que:

(a) on fait avancer ladite feuille à travers un bain de refroidissement (24) entre lesdits rouleaux de coulée (16, 18, 20) et lesdits rouleaux de compression (34, 36) pour refroidir ladite feuille à une troisième température inférieure à ladite seconde température;

(b) on maintient ladite feuille à une quatrième température sur lesdits rouleaux de compression (34, 36); et

(c) on met ladite feuille sous tension avec des moyens de tension (40, 42, 50, 52, 54, 60) vers l'avant en coopération avec lesdits rouleaux de compresion (34, 36) de façon à provoquer l'orientation des chaînes macromoléculaires dans ladite matière de ladite feuille alors que ladite feuille sort desdits rouleaux de compression, ledit stade de mise sous tension de ladite feuille consistant:

à prévoir comme partie desdits moyens de tension, un ou plusieurs rouleaux de refroidissement brusque (40, 42) et à refroidir lesdits rouleaux de refroidissement brusque de façon à refroidir ladite feuille à une cinquième température inférieure à ladite quatrième température;

à prévoir comme partie desdits moyens de tension, un ou plusiers rouleaux de traitement de surface (50, 54) et à chauffer lesdits rouleaux de traitement en surface (50, 54) pour réchauffer une surface de ladite feuille à une sixième température supérieure à ladite cinquième température et comprise entre environ 177 et 274°C pendant une durée suffisante pour provoquer la fusion de surface à une profondeur comprise entre environ 0,00254 et 0,0762 mm mais pendant une durée insuffisante pour provoquer la fusion de toute l'épaisseur de ladite feuille; et

à prévoir comme partie desdits moyens de tension, un ou plusieurs rouleaux de suppression de contrainte (60) et à chauffer lesdits rouleaux de suppression de contrainte à une septième température inférieure à ladite sixième température afin de permettre à ladite feuille d'atteindre une température uniforme dans toute sa section transversale pour ainsi effectuer la stabilisation de ladite feuille;

de sorte que les rouleaux (40, 42, 50, 52, 54, 60) desdits moyens de tension non seulement mettent ladite feuille sous tension en coopération avec lesdits rouleaux de compression (34, 36) pour effectuer ladite orientation des chaînes macromoléculaires mais effectuent aussi simultanément ledit refroidissement de ladite feuille, ladite fusion de surface de ladite feuille et ladite stabilisation de ladite feuille.

2. Procédé selon la revendication 1, caractérisé en ce que ledit procédé comprend l'étape consistant à prévoir au moins deux rouleaux (50, 54) de traitement de surface tournant dans des sens opposés et espacés le long de ladite feuille, l'un de ces rouleaux de traitement de surface (50) étant en contact avec la surface d'un côté de la feuille sur une partie de la circonférence du rouleau et l'autre rouleau de traitement de la surface (54) étant en contact avec la surface de l'autre côté de ladite feuille sur une partie de la circonférence du rouleau.

3. Procédé selon la revendication 1, caractérisée en ce que ledit procédé comprend l'étape consis-

10

tant à entraîner positivement moins un ou plusieurs desdits rouleaux de refroidissement (40, 42), desdits rouleaux de traitement des surfaces (50, 54) et desdits rouleaux de suppression des contraintes (60) pour les faire tourner à une vitesse périphérique plus grande que lesdits rouleaux de compression (34, 36) afin de mettre ladite feuille sous tension.

4. Procédé selon la revendication 3, caractérisé en ce que ledit procédé comprend l'étape consistant à entraîner positivement lesdits rouleaux de refroidissement (40, 42) pour les faire tourner à une vitesse périphérique plus grande que lesdits rouleaux de compression (34, 36) afin de mettre ladite feuille sous une tension comprise entre environ 1,79 et environ 62,56 kg/cm de largeur de la feuille.

5. Procédé selon la revendication 1, caractérisé en ce que ledit procédé comprend l'étape consistant à chauffer lesdits rouleaux de compression (34, 36) pour les maintenir à une température comprise entre environ 37,8°C et environ 104,4°C.

6. Procédé selon la revendication 1, caractérisé en ce que ledit procédé comprend l'étape consistant à faire circuler un fluide de transfert de chaleur à une température comprise entre environ 177°C et environ 371°C dans des passages de chacun des rouleaux de traitement de surface (50, 54).

7. Procédé selon la revendication 1, caractérisé en ce que ledit procédé comprend l'étape consistant à chauffer au moins un desdits rouleaux (60) de suppression des contraintes à ladite septième température d'environ 149°C.

8. Procédé selon la revendication 1, caractérisé en ce qu'on maintient ladite feuille à une tension supérieure à 0,89 kg/cm de la largeur transversale de la feuille pendant au moins une partie de son déplacement dans une zone de stabilisation de son trajet sur les rouleaux (60) de suppression des contraintes.

9. Procédé selon la revendication 1, caractérisé en ce que chacun des rouleaux de traitement de surface (50, 54) est cylindrique et présente un diamètre d'environ 7,62 cm et en ce que l'étape consistant à mettre ladite feuille sous tension consiste à faire avancer ladite feuille à une vitesse comprise entre 15,24 et 106,68 m/min sur lesdits rouleaux de traitement de surface (50, 54).

10. Procédé selon la revendication 1, caractérisé en ce que chaque rouleau de traitement de surface (50, 54) est cylindrique et présente un diamètre d'environ 7,62 cm et en ce que l'étape consistant à mettre ladite feuille sous tension consiste à faire avancer ladite feuille suivant un trajet partiellement autour de la circonférence de chacun des rouleaux de traitement de surface sur un arc compris entre 40° et 80°.

11. Procédé selon la revendication 1, caractérisé en ce que l'étape consistant à mettre ladite feuille sous tension consiste à mettre ladite feuille en contact avec au moins l'un des rouleaux de traitement de surface (50, 54) présentant une surface de contact avec la matière choisie dans un groupe de métaux comprenant l'aluminium et l'acier laminé à froid.

12. Appareil de production d'une feuille résistant à l'abrasion (S) à partir d'une matière de polypropylène linéairement cristallisable, ledit appareil comprenant: des moyens d'extrusion (10, 12) pour extruder ladite feuille de ladite matière à une première température à laquelle ladite matière est rendue coulable; des rouleaux de coulée multiples menés à transfert de chaleur (16, 18, 20) pour acheminer ladite feuille vers l'avant et pour former ladite feuille, et des moyens associés pour maintenir lesdits rouleaux de coulée à une température inférieure à ladite première température, de sorte que ladite feuille est refroidie à une seconde température inférieure à ladite première température; des moyens de compression chauffés comportant des rouleaux de compression (34, 36) chauffés et menés pour comprimer ladite feuille et pour provoquer la coulée de ladite matière dans ladite feuille vers l'avant de manière à réduire l'épaisseur de la section transversale de ladite feuille; des moyens pour mettre ladite feuille sous tension de manière à provoquer l'orientation des chaînes macromoléculaires dans ladite matière de ladite feuille; et des rouleaux de traitement de surface (50, 54) pour chauffer une surface de ladite feuille pendant un temps suffisant pour provoquer une fusion dans la surface de ladite feuille sur une partie d'lépaisseur de la feuille mais insuffisant pour provoquer une fusion dans toute l'épaisseur de la feuille; caractérisé en ce que:

(a) ledit appareil comprend un bain de refroidissement (24) entre lesdits rouleaux de coulée (16, 18, 20) et lesdits rouleaux de compression (34, 36) pour refroidir ladite feuille à une troisième température inférieure à ladite seconde température;

(b) des moyens pour chauffer lesdits rouleaux de compression (34, 36) afin de maintenir ladite feuille à une quatrième température sur lesdits rouleaux de compression (34, 36); et

(c) lesdits moyens de mise sous tension de ladite feuille comprennent des moyens (40, 42, 50, 52, 54, 60) pour effectuer la tension de ladite feuille vers l'avant en coopération avec les rouleaux de compression (34, 36) de façon à provoquer l'orientation des chaînes macromoléculaires dans ladite matière de ladite feuille alors que ladite feuille sort desdits rouleaux de compression (34, 36), lesdits moyens de tension comprenant également

un ou plusieurs rouleaux de refroidissement brusque (40, 42) qui sont refroidis afin de refroidir ladite feuille à une cinquième température inférieure à ladite quatrième température;

un ou plusieurs desdits rouleaux de traitement de surface (50, 54) chauffés pour réchauffer une surface de ladite feuille à une sixième température supérieure à ladite cinquième température et comprise entre environ 177°C et environ 274°C pendant une durée suffisante pour provoquer une fusion de surface à une profondeur d'environ 0,00254 à 0,0762 mm mais pendant une durée insuffisante pour provoquer la fusion dans toute l'épaisseur de ladite feuille; et

un ou plusieurs rouleaux (60) de suppression de contrainte chauffés à une septième température inférieure à ladite sixième température pour conduire ladite feuille à atteindre une température uniforme sur toute sa section transversale pour effectuer la stabilisation de ladite feuille;

de sorte que les rouleaux (40, 42, 50, 52, 54, 60) desdits moyens de tension non seulement mettent ladite feuille sous tension en coopération avec lesdits rouleaux de compression (34, 36) pour effectuer ladite orientation des chaînes macromoléculaires mais aussi effectuent simultanément ledit refroidissement de ladite feuille, ladite fusion de surface de ladite feuille et ladite stabilisation de ladite feuille.

13. Appareil selon la revendication 12, caractérisé en ce que le ou lesdits rouleaux de traitement de surface (50, 54) comprennent au moins deux rouleaux de traitement de surface (50, 54) tournant dans des sens opposés et espacés le long de ladite feuille, l'un de ces rouleaux de traitement (50) étant en contact avec la surface sur un côté de ladite feuille sur une partie de sa circonférence et l'autre rouleau de traitement de surface (54) étant en contact avec la surface de l'autre côté de ladite feuille sur une partie de sa circonférence.

14. Appareil selon la revendication 12, caractérisé en ce que chaque rouleau de traitement de surface (50, 54) est cylindrique et présente un diamètre d'environ 7,62 cm.

15. Appareil selon la revendication 12, caractérisé en ce que lesdits moyens de tension comprennent des moyens pour entraîner au moins un ou plusieurs des rouleaux de refroidissement (40, 42), des rouleaux de traitement de surface (50, 54) et des rouleaux de suppression des contraintes (60) pour les faire tourner à une vitesse périphérique plus grande que lesdits rouleaux de compression (34, 36) afin de mettre ladite feuille sous tension.

16. Appareil selon la revendication 15, caractérisé en ce que ledit appareil comprend des moyens pour entraîner les rouleaux de refroidissement (40, 42) afin de les faire tourner à une vitesse périphérique plus grande que lesdits rouleaux de compression (34, 36) afin de mettre ladite feuille sous une tension comprise entre environ 1,79 et environ 62,56 kg/cm de largeur de feuille.

17. Appareil selon la revendication 12, caractérisé en ce que lesdits rouleaux de compression (34, 36) sont chauffés pour être maintenus à une température comprise entre environ 37,8°C et environ 104,4°C.

18. Appareil selon la revendication 12, caractérisé en ce que chaque rouleau de traitement se surface (50, 54) est fabriqué en aluminium ou en acier laminé à froid et définit des passages permettant la circulation d'un fluide de transfert de chaleur à une température comprise entre environ 177°C et environ 371°C.

19. Appareil selon la revendication 12, caractérisé en ce que lesdits rouleaux de suppression de contrainte (60) comportent des moyens pour chauffer chaque rouleau de suppression de contrainte à ladite septième température, d'environ 149°C.